(19) Europäisches Patentamt
European Patent Office
Office européen des brevets

(11) **EP 4 307 005 A1**

(12) **EUROPEAN PATENT APPLICATION**
published in accordance with Art. 153(4) EPC

(43) Date of publication:
**17.01.2024  Bulletin 2024/03**

(21) Application number: **22770361.8**

(22) Date of filing: **09.03.2022**

(51) International Patent Classification (IPC):
**G01S 17/00** (2020.01)        **G01S 7/48** (2006.01)

(52) Cooperative Patent Classification (CPC):
**G01S 7/48; G01S 7/481; G01S 7/487; G01S 7/493;
G01S 17/00; G01S 17/894**

(86) International application number:
**PCT/CN2022/079950**

(87) International publication number:
**WO 2022/194006 (22.09.2022 Gazette 2022/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.03.2021  CN 202110278074**

(71) Applicant: **Huawei Technologies Co., Ltd.
Shenzhen, Guangdong 518129 (CN)**

(72) Inventors:
• **WANG, Xiaoheng
Shenzhen, Guangdong 518129 (CN)**
• **AN, Kai
Shenzhen, Guangdong 518129 (CN)**
• **WANG, Hongliang
Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54) **DETECTION APPARATUS**

(57)    Embodiments of this application provide a detection apparatus, which may be applied to the fields such as autonomous driving, intelligent driving, surveying and mapping, smart homes, or smart manufacturing. The detection apparatus includes a laser source (101), an optical dispersion system (102), an emitting optical system (103), and an area array detector (201). The laser source (101) is configured to emit a first light beam to the optical dispersion system. The first light beam is polychromatic light whose wavelength range is a first waveband. The optical dispersion system (102) is configured to split the first light beam to obtain a second light beam. A wavelength of the second light beam changes linearly in a first direction. The second light beam includes splitting beams whose wavelengths change continuously in the first direction. The emitting optical system (103) is configured to emit the splitting beams. The area array detector (201) is configured to receive echo light beams of the splitting beams. The area array detector (201) includes N regions. The N regions are used to receive the splitting beams whose wavelengths change continuously. Through implementation of this solution, echo light beams of light beams of different wavelengths may be simultaneously obtained, and a spectral characteristic and a spatial distance to a target object may be obtained by using the echo light beams.

FIG. 1

## Description

This application claims priority to Chinese Patent Application No. 202110278074.1, filed with the China National Intellectual Property Administration on March 15, 2021 and entitled "DETECTION APPARATUS", which is incorporated herein by reference in its entirety.

## TECHNICAL FIELD

The present invention relates to a radar technology, is applied to the fields such as autonomous driving, intelligent driving, surveying and mapping, smart homes, or intelligent manufacturing, and in particular, relates to a detection apparatus.

## BACKGROUND

A laser radar system may emit pulsed light and obtain an echo signal of the pulsed light on a surface of a detected target object, to obtain a spatial distance to the target object based on a frequency change or a time of flight of the echo signal. Because a laser radar has high detection efficiency and range resolution ability, the laser radar is widely used in many fields such as deep space detection, traffic travel, and disaster relief, and plays an important role in national defense and civil fields.

An optical system of the laser radar includes an emitting optical module and a receiving optical module. The laser radar may be classified based on a laser emission manner. The laser emission manner includes mechanical rotary scanning, micro-electro-mechanical system (micro-electro-mechanical system, MEMS) scanning, optical phased array (optical phased array, OPA) scanning, 3D area array flash (Flash), and the like. Compared with another manner, a 3D flash laser radar can instantly emit an area array light beam to specific field of view space, without scanning different FOVs. Therefore, the 3D flash manner has higher efficiency in light beam emission, and will become a mainstream manner of laser radar emission in the future.

Currently, the 3D flash laser radar can instantly emit a light beam of a same spectrum band to all fields of view in space by using a surface light source, or a diffractive optical element, a microlens array, and the like. An echo signal received in this method has only spatial distance information, but a spectral characteristic of a target object cannot be obtained. Currently, there is a lack of a detection apparatus capable of simultaneously detecting a spectral characteristic and a spatial distance to a target object.

## SUMMARY

Embodiments of this application provide a detection apparatus. The detection apparatus includes a laser source, an optical dispersion system, an emitting optical system, and an array detector. The laser source is configured to emit a first light beam to the optical dispersion system. The first light beam is polychromatic light whose wavelength range is a first waveband. The optical dispersion system is configured to split the first light beam to obtain a second light beam. A wavelength of the second light beam changes linearly in a first direction. The second light beam includes splitting beams whose wavelengths change continuously in the first direction. The emitting optical system is configured to emit the splitting beams. The array detector is configured to receive echo light beams of the splitting beams. The array detector includes N regions. A plurality of pixels are arranged in the N regions as an array. The N regions are used to receive the splitting beams whose wavelengths change continuously. Wavelength ranges of the echo light beams received in the N regions are different.

In embodiments of this application, echo light beams of light beams of different wavelengths can be simultaneously obtained, and a spectral characteristic and a spatial distance to a target object can be obtained by using the echo light beams.

According to a first aspect, an embodiment of this application discloses a detection apparatus. The apparatus includes:

a laser source, configured to emit a first light beam to an optical dispersion system, where the first light beam is polychromatic light whose wavelength range is a first waveband;

the optical dispersion system, configured to split the first light beam to obtain a second light beam, where a wavelength of the second light beam changes linearly in a first direction, the second light beam includes splitting beams whose wavelengths change continuously in the first direction, and the first direction is perpendicular to an optical axis of the second light beam;

an emitting optical system, configured to emit the splitting beams; and

an array detector, configured to receive echo light beams of the splitting beams, where

the array detector includes N regions, a plurality of pixels are arranged in the N regions as an array, the N regions do not overlap each other, the N regions are used to receive the echo light beams of the splitting beams, wavelength ranges of the echo light beams received in the N regions are different, and N is a positive integer greater than 1.

In this embodiment of this application, the light beam emitted by the laser source is split by using the optical dispersion system, to obtain the light beams (that is, the second light beam) of different wavelengths. By emitting the second light beam to detection space by the emitting optical system, instantaneous emission of light beams of different wavelengths can be achieved. Therefore, after the second light beam is emitted once, echo light beams of the light beams of different wavelengths are obtained, and efficiency of obtaining the echo light beams of the light beams of different wavelengths is improved. In addition, in this application, linear array light emitted by the linear array light source may be extended to area array light by using the optical dispersion system. A combination of the linear array light source and the optical dispersion system is equivalent to an area array light source. The method avoids use of a complex optical element like the area array light source or a diffractive optical element, so that costs of the detection apparatus can be reduced.

With reference to the first aspect, in a possible implementation, the apparatus further includes N light filtering apparatuses. The N light filtering apparatuses are disposed corresponding to the N regions, and are respectively configured to transmit the echo light beams of the splitting beams corresponding to the N regions.

The light filtering apparatus may be an apparatus that allows only a light beam of a specific wavelength to pass through, for example, an optical filter, an optical filter membrane, or a quantum dot. In this embodiment of this application, stray light can be filtered out by using the light filtering apparatus, to ensure that echo light beams of different wavelengths are received in different regions, so as to ensure accuracy of an echo signal.

With reference to the first aspect, in a possible implementation, the optical dispersion system includes a focusing apparatus and a concave grating. The focusing apparatus is configured to focus the second light beam on a focal plane of the emitting optical system.

With reference to the first aspect, in a possible implementation, the optical dispersion system includes a convex grating.

With reference to the first aspect, in a possible implementation, the apparatus further includes a receiving optical system.

The receiving optical system is configured to focus the echo light beams on the N regions.

The receiving optical system may be an optical system including a plurality of lenses, and the optical system has a focusing function. Specifically, light beams of different wavelengths enter the receiving optical system at different angles, and the optical system focuses light beams of different angles in different regions, so that echo light beams of the light beams of different wavelengths are focused on different locations in the N regions. By obtaining signals in different regions, a processor may obtain echo signals of different wavelengths that are emitted to a target object and that are reflected by the target object, to implement research on a spectral characteristic of the target object, and obtain a characteristic like a material of the target object.

With reference to the first aspect, in a possible implementation, the emitting optical system includes at least one cylindrical lens or toroidal lens arranged along an optical axis.

In some embodiments, a cylindrical lens and a toroidal lens may be added to the emitting optical system, so that a focal length of the emitting optical system is adjusted, and a range of a light beam emitted by the emitting optical system may be controlled.

With reference to the first aspect, in a possible implementation, the laser source is a linear array light source. An extension direction of the linear array light source is perpendicular to the first direction.

With reference to the first aspect, in a possible implementation, the focusing apparatus is configured to focus the splitting beams on the focal plane of the emitting optical system to form a two-dimensional rectangular image plane. A width of the two-dimensional rectangular image plane is parallel to the first direction.

In this embodiment of this application, the optical dispersion system may perform dispersion on the linear array light of the linear array light source, to obtain the area array light. The area array light includes light beams of different wavelengths, and the light beams of different wavelengths are located at different spatial locations. For example, if the grating in the optical dispersion system performs dispersion on the linear array light, the second light beam that includes a plurality of splitting beams having a specific arrangement rule may be obtained. The array detector is disposed according to the rule, so that the array detector can receive the echo light beams of splitting beams of different wavelengths.

With reference to the first aspect, in a possible implementation, the emitting optical system emits the splitting beams at a first FOV and a second FOV The first FOV corresponds to the width of the two-dimensional rectangular image plane and a first focal length of the emitting optical system. The second FOV corresponds to the width of the two-dimensional rectangular image plane and a second focal length of the emitting optical system.

The focal length of the emitting optical system includes the first focal length and the second focal length. By controlling the focal length of the emitting optical system, the FOV of emitting light beams by the emitting optical system is controlled. This is beneficial to effectively adjust the detection space based on an actual situation.

With reference to the first aspect, in a possible implementation, the apparatus further includes a processor. The processor is configured to generate a spectrum based on the echo light beams received by using the plurality of pixels. The spectrum indicates light intensities of the echo light beams formed after a target reflects the splitting beams corresponding to the plurality of pixels.

With reference to the first aspect, in a possible implementation, the processor is further configured to determine, based on a time difference between an emission time of the splitting beams and a time at which the pixels in the array detector receive the echo light beams, a spatial distance detected by the pixels to the target.

According to a second aspect, an embodiment of this application discloses a control method, including:

controlling a laser source to emit a first light beam to an optical dispersion system, where the first light beam is polychromatic light whose wavelength range is a first waveband;

splitting, by using the optical dispersion system, the first light beam to obtain a second light beam, where a wavelength of the second light beam changes linearly in a first direction, the second light beam includes splitting beams whose wavelengths change continuously in the first direction, and the first direction is perpendicular to an optical axis of the second light beam;

emitting, by using an emitting optical system, the splitting beams; and

controlling an array detector to receive echo light beams of the splitting beams, where

the array detector includes N regions, a plurality of pixels are arranged in the N regions as an array, the N regions do not overlap each other, the N regions are used to receive the echo light beams of the splitting beams, wavelength ranges of the echo light beams received in the N regions are different, and N is a positive integer greater than 1.

With reference to the second aspect, in a possible implementation, an apparatus further includes N light filtering apparatuses. The N light filtering apparatuses are disposed corresponding to the N regions. The method further includes:

The N light filtering apparatuses transmit the echo light beams of the splitting beams corresponding to the N regions respectively.

With reference to the second aspect, in a possible implementation, the optical dispersion system includes a focusing apparatus and a concave grating, and the method specifically includes:

focusing, by using the focusing apparatus, the second light beam on a focal plane of the emitting optical system.

With reference to the second aspect, in a possible implementation, the optical dispersion system includes a convex grating.

With reference to the second aspect, in a possible implementation, the apparatus further includes a receiving optical system, and the method further includes:

The receiving optical system focuses the echo light beams on the N regions.

With reference to the second aspect, in a possible implementation, the emitting optical system includes at least one cylindrical lens or toroidal lens arranged along an optical axis.

With reference to the second aspect, in a possible implementation, the laser source is a linear array light source. An extension direction of the linear array light source is perpendicular to the first direction.

With reference to the second aspect, in a possible implementation, the method specifically includes: The focusing apparatus focuses the splitting beams on the focal plane of the emitting optical system to form a two-dimensional rectangular image plane. A width of the two-dimensional rectangular image plane is parallel to the first direction.

With reference to the second aspect, in a possible implementation, the emitting optical system emits the splitting beams at a first FOV and a second FOV The first FOV corresponds to the width of the two-dimensional rectangular image plane and a first focal length of the emitting optical system. The second FOV corresponds to the width of the two-dimensional rectangular image plane and a second focal length of the emitting optical system.

With reference to the second aspect, in a possible implementation, the apparatus further includes a processor, and the method further includes:

The processor generates a spectrum based on the echo light beams received by using the plurality of pixels. The spectrum indicates light intensities of the echo light beams formed after a target reflects the splitting beams corresponding to the plurality of pixels.

With reference to the second aspect, in a first possible implementation, the method further includes:

The processor determines, based on a time difference between an emission time of the splitting beams and a time at which the pixels in the array detector receive the echo light beams, a spatial distance detected by the pixels to the target.

According to a third aspect, an embodiment of this application provides a control apparatus, including a control unit. Optionally, the control apparatus further includes a processing unit. The control apparatus is configured to implement the method described in any one of the second aspect or the possible implementations of the second aspect. There may be one or more control units and processing units.

In a possible implementation, the control unit is configured to control a laser source to emit a first light beam to an optical dispersion system, where the first light beam is polychromatic light whose wavelength range is a first waveband.

The optical dispersion system splits the first light beam to obtain a second light beam. A wavelength of the second light beam changes linearly in a first direction. The second light beam includes splitting beams whose wavelengths change continuously in the first direction. The first direction is perpendicular to an optical axis of the second light beam.

An emitting optical system emits the splitting beams.

The control unit is further configured to control an array detector to receive echo light beams of the splitting beams.

The array detector includes N regions. A plurality of pixels are arranged in the N regions as an array. The N regions do not overlap each other. The N regions are used to receive the echo light beams of the splitting beams. Wavelength ranges of the echo light beams received in the N regions are different. N is a positive integer greater than 1.

According to a fourth aspect, an embodiment of this application discloses a control apparatus, including at least one processor and a communication interface. The communication interface is configured to provide an input and/or output for the at least one processor. The processor is configured to execute a computer program to implement the method described in any one of the second aspect or the possible implementations of the second aspect.

According to a fifth aspect, an embodiment of this application discloses a laser radar. The laser radar includes the apparatus described in any one of the first aspect or the possible implementations of the first aspect.

According to a sixth aspect, an embodiment of this application discloses a terminal. The terminal includes the detection apparatus described in any one of the first aspect or the possible implementations of the first aspect.

In a possible implementation of the sixth aspect, the terminal may be a transportation tool or an intelligent terminal like a vehicle, an uncrewed aerial vehicle, a roadside unit, an intersection radar, or a robot.

According to a seventh aspect, an embodiment of this application discloses a computer-readable storage medium. The computer-readable storage medium stores a computer program. When the computer program is run on one or more processors, the method described in any one of the second aspect or the possible implementations of the second aspect is implemented.

According to an eighth aspect, an embodiment of this application discloses a computer program product. When the computer program product runs on one or more processors, the method described in any one of the second aspect or the possible implementations of the second aspect is implemented.

It should be noted that some possible implementations of the second aspect and the third aspect of this application have a same concept as some implementations of the first aspect. For beneficial effects brought by the possible implementations of the second aspect and the third aspect, refer to the beneficial effects of the first aspect. Therefore, details are not described again.

**BRIEF DESCRIPTION OF DRAWINGS**

The following describes accompanying drawings used in embodiments of this application.

FIG. 1 is a schematic diagram of a structure of a detection apparatus according to an embodiment of this application;

FIG. 2 is a schematic diagram of structures of two linear array light sources according to an embodiment of this application;

FIG. 3 is a schematic diagram of a first direction according to an embodiment of this application;

FIG. 4 is a schematic diagram of a structure of an optical dispersion system according to an embodiment of this application;

FIG. 5A is a schematic diagram of a first light beam and a second light beam according to an embodiment of this application;

FIG. 5B is a schematic diagram of a two-dimensional rectangular image plane according to an embodiment of this application;

FIG. 6A is a three-dimensional schematic diagram of an emitting optical system according to an embodiment of this application;

FIG. 6B is a schematic diagram of a cross section of an emitting optical system according to an embodiment of this application;

FIG. 6C is a schematic diagram of another cross section of an emitting optical system according to an embodiment of this application;

FIG. 7 is a schematic diagram of emitting a second light beam by an emitting optical system according to an embodiment of this application;

FIG. 8 is a schematic diagram of a receiving optical module according to an embodiment of this application;

FIG. 9 is a schematic diagram of a second light beam and an echo light beam according to an embodiment of this application;

FIG. 10 is a schematic diagram of a structure of a receiving optical system according to an embodiment of this application; and

FIG. 11 is a schematic diagram of an array detector according to an embodiment of this application.

**DESCRIPTION OF EMBODIMENTS**

Terms used in the following embodiments of this application are merely intended to describe specific embodiments, but are not intended to limit embodiments of this application. The terms "one", "a", "an", "the", and "this" of singular forms used in this specification and the appended claims of embodiments of this application are also intended to include plural forms, unless otherwise specified in the context clearly. It should also be understood that the term "and/or" used in embodiments of this application means and includes any or all possible combinations of one or more listed items.

The following describes some related concepts in embodiments of this application.

1. Laser radar

A laser radar can obtain a distance, a velocity and other information of an object with high precision, and plays an important role in modern military and civil fields.

The laser radar can be divided into two categories, namely mechanical laser radar and solid-state laser radar. A mechanical laser radar uses a mechanical rotating part as a light beam scanning implementation, and has a large volume, low scanning frequency, and large motor loss during long-term use.

At present, there are three main ways to implement a solid-state laser radar, namely, a micro-electromechanical system, an area array flash technology, and an optical phase array technology.

A main principle of the MEMS is as follows: A mechanical structure is integrated into a silicon-based chip with a small volume by using the MEMS. A rotatable MEMS micro-mirror is inside the silicon-based chip. An emission angle of a single emitter is changed by using the micro-mirror, to achieve an effect that scanning can be performed without rotating an external structure. The micro-mirror can achieve a specific degree of integration, but it is limited by a deflection range of the micro-mirror.

A principle of the OPA scanning technology is similar to interference. A plurality of light sources are used to form an array. A main light beam with a specific direction is synthesized by controlling a time difference of light emitting from each light source. Then the main light beam can be further controlled to scan different directions. Precision of the radar can be millimeter level, in line with a solid, miniaturized and low-cost trend of a future laser radar. However, a difficulty lies in how to improve point cloud data measured per unit time and reduce huge investment costs.

In embodiments of this application, a detection apparatus may be a laser radar or include at least one component inside a laser radar.

2. Flash laser radar

A flash laser radar uses an area array flash technology. A principle of the area array flash technology is to emit a large amount of laser beams covering a detection region in a short time, and then a highly sensitive receiver collects the laser beams reflected back in different directions, to complete image drawing of an ambient environment. The flash laser radar can quickly record an entire scene, so that various troubles caused by a movement of a target or the laser radar during a scanning process can be avoided.

Specifically, the flash laser radar emits an area array laser to irradiate the target, and the target scatters the incident light. Because an object has three-dimensional spatial attributes, light irradiated to different parts of the object has different time of flight, is detected by a focal plane detector array, and is output as a "three-dimensional" image with depth information.

However, most of current 3D flash emission schemes and concepts use surface light sources or diffractive optical elements, and microlens arrays to emit light beams of a same spectrum onto all fields of view in space instantaneously. A received echo signal only has spatial distance information, but spectral characteristics of the echo signal cannot be determined based on strength of echo signals of adjacent pixels, so that information such as a material property of the target cannot be obtained.

A detection apparatus in embodiments of this application may be a flash laser radar that can obtain a spectral characteristic of a target.

3. Dispersion

Dispersion is a phenomenon in which polychromatic light is decomposed into light of different wavelengths to form a spectrum. Dispersion elements include a prism and a grating. The prism uses a refraction principle of light, and the grating uses diffraction and interference principles of light to achieve a purpose of dispersion. For example, after polychromatic light enters the prism, because the prism has different refractive indexes for light of various frequencies, propagation directions of light of various colors is deflected to a specific extent, and the various color light is dispersed when leaving the prism to form a spectrum. For example, when sunlight passes through the prism, a continuous color spectrum arranged from red to purple is formed. For another example, when polychromatic light passes through a grating or interferometer, light of various colors can also be dispersed due to diffraction and interference of light. In a broad sense, dispersion refers not only to decomposition of a light wave into a spectrum, but also to any physical quantity that varies with frequency (or wavelength), like optical rotatory dispersion. In some embodiments, dispersion may also be referred to as spectral beam splitting.

The optical dispersion system includes an optical system of a dispersion element, like an imaging spectrometer. The imaging spectrometer can obtain a large number of continuous narrow waveband spectral images of a ground object target while obtaining almost continuous spectral data of each pixel.

A detection apparatus in embodiments of this application obtains, by using the principle of dispersion, a light beam including splitting beams of different wavelengths, and detects a target object by using the light beam including splitting beams of different wavelengths, to obtain a spectral characteristic of the target object.

A detection apparatus in embodiments of this application may simultaneously emit light beams with different wavelengths, and obtain echo light beams obtained after the light beams with different wavelengths are reflected by a target, and may obtain a spectral characteristic and a spatial distance to the target based on the echo light beams.

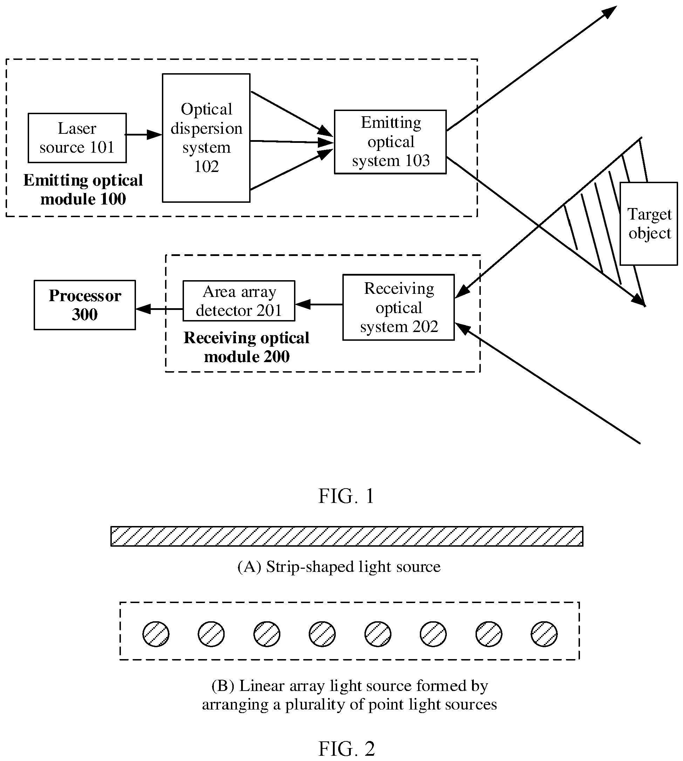

FIG. 1 is a schematic diagram of a structure of a detection apparatus according to an embodiment of this application. The detection apparatus 10 includes an emitting optical module 100 and a receiving optical module 200.

The emitting optical module 100 is configured to emit a light beam whose wavelength changes linearly in a first direction. The light beam includes splitting beams whose wavelengths change continuously in the first direction. The first direction is perpendicular to an optical axis of the light beam. Specifically, the first direction may be any direction on a plane perpendicular to the optical axis of the light beam. It should be noted that, from a perspective of process or component performance, if the wavelength of the light beam is within a specific range, it may be understood that the wavelength of the light beam changes linearly.

The emitting optical module 100 may include a laser source 101, an optical dispersion system 102, and an emitting optical system 103. The laser source 101 may be a point light source or a linear array light source. The optical dispersion system 102 may be an optical system including a convex grating and a focusing apparatus, or may be a concave grating, or may be an imaging spectrometer including a prism. The emitting optical system 103 may be a lens combination composed of spherical lens. It should be noted that, for implementation of technical solutions in this application, the laser source, the optical dispersion system, and the emitting optical system are not specifically limited in this application.

Specifically, the laser source 101 emits a first light beam to the optical dispersion system 102. The first light beam is polychromatic light whose wavelength range is a first waveband. The optical dispersion system 102 may split the first light beam to obtain a second light beam. A wavelength of the second light beam changes linearly in the first direction. The second light beam includes splitting beams whose wavelengths change continuously in the first direction. The first direction is perpendicular to an optical axis of the second light beam. The first direction is determined by a dispersion direction of the optical dispersion system to the first light beam. The emitting optical system 103 emits the second light beam to detection space. Specifically, the emitting optical system emits light beams of different wavelengths in the second light beam to the detection space at different emission angles.

That the wavelength of the second light beam changes linearly in the first direction means that the wavelength of the second light beam has a specific range in the first direction. Specifically, the wavelength of the first light beam may increase or decrease in the first direction. For example, the second light beam includes splitting beams of 850 nm, 851 nm, and 852 nm. The optical axis of the second light beam is parallel to the ground, so that the first direction is perpendicular to the ground. That the wavelength of the second light beam increases or decreases in the first direction means that: Among the three splitting beams, the 850 nm light beam is the furthest from the ground, the 852 nm light beam is the closest to the ground, and the 851 nm splitting beam is located between the 850 nm light beam and the 852 nm light beam. It may be considered that the second light beam is formed by a plurality of splitting beams whose wavelengths change continuously in the first direction, and splitting beams at different positions in the first direction have different wavelengths. For example, a wavelength range of the first light beam emitted by the laser source is A nm to F nm. The wavelength of the second light beam obtained by splitting the first light beam by using the optical dispersion system changes linearly in the first direction. It may be considered that the second light beam includes a plurality of splitting beams, and wavelength ranges of the plurality of splitting beams are different from each other. In addition, the wavelength of each splitting beam changes continuously in the first direction. For example, it may be considered that the second light beam may include five laser beams, and wavebands of the five laser beams are respectively A nm to B nm, B nm to C nm, C nm to D nm, D nm to E nm, and E nm to F nm, where $0<A<B<C<D<E<F$. The first direction is perpendicular to the optical axis of the second light beam. For example, if the optical axis of the second light beam is parallel to the ground, the first direction is perpendicular to the ground.

The receiving optical module 200 is configured to receive an echo light beam of the light beam emitted by the emitting optical module 100.

The receiving optical module 200 may include a receiving optical system 201 and an area array detector 202. The receiving optical system 201 may be a lens combination, and is configured to focus the echo light beam on the area array detector 202. The area array detector 202 is configured to receive the echo light beam. It should be understood that the emitting optical system emits the light beams with different wavelengths in the second light beam to the detection space at different emission angles, so that the receiving optical system may receive echo light beams incident at different angles, and focus the echo light beams incident at different angles on different regions of the area array detector. To be specific, the echo light beams of the splitting beams of different wavelengths are focused on different regions of the area array detector.

The area array detector 202 may include N regions. A plurality of pixels are arranged in the N regions as an array. The N regions do not overlap each other. The N regions are used to receive the splitting beams whose wavelengths change continuously. Wavelength ranges of the echo light beams received in the N regions are different. N is a positive integer greater than 1. It may be understood that each region corresponds to a splitting beam of a wavelength range in the second light beam, that is, each pixel corresponds to a light beam of a specific wavelength.

Optionally, the detection apparatus 10 may further include N light filtering apparatuses. The N light filtering apparatuses are disposed corresponding to the N regions, and are respectively configured to transmit the echo light beams of the splitting beams corresponding to the N regions. To be specific, an $i^{th}$ light filtering apparatus allows only an echo light beams of a splitting beam corresponding to an $i^{th}$ region to pass through, where i is a positive integer not greater than N. The light filtering apparatus may be an optical filter, an optical filter membrane, a quantum dot, or the like. It should be understood that stray light may be filtered out by using the light filtering apparatus, to ensure that echo light beams of different wavelengths are received in different regions.

In some embodiments, the detection apparatus 10 may further include a processor 300. The processor 300 may obtain a spectral characteristic and a spatial distance to a target object based on the echo light beams. Specifically, the processor 300 is configured to generate a spectrum based on the echo light beams received by using the plurality of pixels. The spectrum indicates light intensities of the echo light beams formed after a target reflects the splitting beams corresponding to the plurality of pixels. For example, splitting beams corresponding to q pixels are reflected by the target object. The q pixels are respectively located in different regions of the N regions. The processor may obtain light intensities of echo light beams received by the q pixels, and obtain a spectrum of the target object based on wavelengths of splitting beams corresponding to the q pixels and the light intensities of the echo light beams received by the q pixels. The processor is further configured to determine, based on a time difference between an emission time of the N splitting beams and a time at which the pixels in the area array detector 202 receive the echo light beams, a spatial distance detected by the pixels to the target. The spatial distance may be a distance from the detection apparatus 10 to the target object. It should be understood that after the spectral characteristic of the target object is obtained, a property like a material of the target object may be interpreted based on the spectral characteristic of the target object.

The following describes a detection apparatus 300 provided in an embodiment of this application.

The detection apparatus 300 may include a linear array light source 310, an optical dispersion system 320, an emitting optical system 330, a receiving optical system 340, and an area array detector 350.

The linear array light source 310 is configured to emit a first light beam to the optical dispersion system 320. The first light beam is polychromatic light whose wavelength range is a first waveband. For example, the first light beam may be a laser beam with a wavelength range of 850 nm to 950 nm. An extension direction of the linear array light source is perpendicular to a first direction. In the extension direction of the linear array light source, the linear array light source has a specific length. In the first direction, a width of the linear array light source is small, similar to a property of a point light source. It should be noted that a narrower width of a linear array light source can bring a higher resolution after a dispersion element performs light splitting.

FIG. 2 is a schematic diagram of structures of two linear array light sources according to an embodiment of this application. As shown in FIG. 2, the linear array light source may be a strip-shaped rectangular light source shown in (A) in FIG. 2. An extension direction of the linear array light source is parallel to a length of the rectangular light source, and a first direction is parallel to a width of the rectangular light source. The linear array light source may alternatively be a light source formed by arranging a plurality of point light sources shown in (B) in FIG. 2.

The optical dispersion system 320 is configured to split the first light beam emitted by the linear array light source 310 in the first direction, to obtain a second light beam. Therefore, a wavelength of the second light beam changes linearly in the first direction. The first direction is perpendicular to an optical axis of the second light beam. The second light beam includes splitting beam whose wavelengths change continuously in the first direction. It may be understood that the second light beam generated after the first light beam emitted by the linear array light source 310 is split by the optical dispersion system 320 is area array light.

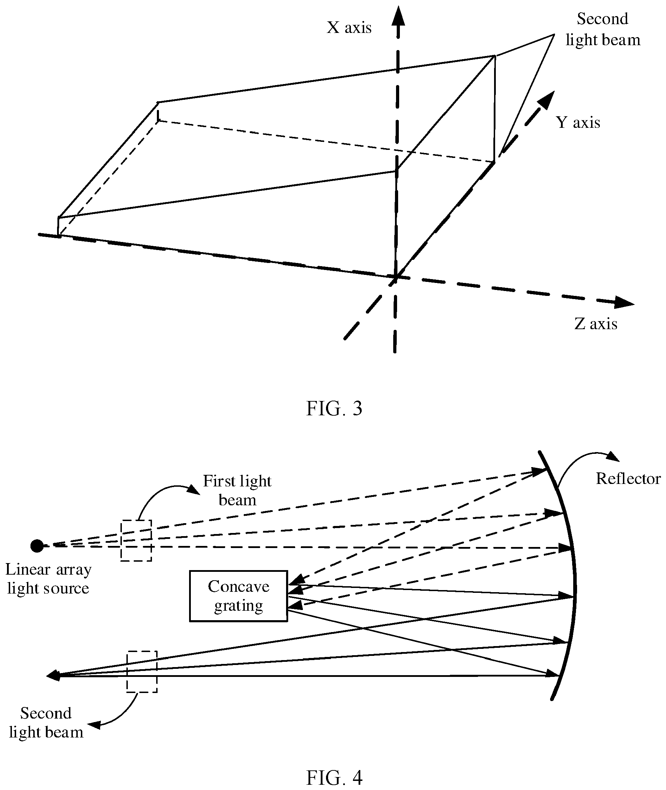

FIG. 3 is a schematic diagram of a first direction according to an embodiment of this application. As shown in FIG. 3, an X axis, a Y axis, and a Z axis are perpendicular to each other. It is assumed that a hexahedron shown in FIG. 3 may be used to represent a second light beam. The second light beam is emitted by a linear array light source from the left side to the right side in FIG. 3. An optical axis of the second light beam is parallel to the Z axis. The hexahedron in FIG. 3 is a part of the second light beam intercepted from an X axis direction, and the optical axis is perpendicular to a plane formed by the X axis and the Y axis. It should be understood that, because the light beam emitted by the laser source is a divergent light beam, an area of a cross section of the X axis of the hexagon in FIG. 3 gradually increases from the left side to the right side. For example, when the optical dispersion system performs dispersion on the first light beam in the X axis direction, the X axis is the first direction, and the wavelength of the second light beam changes linearly in the first direction. For another example, when the optical dispersion system performs dispersion on the first light beam in a Y axis direction, the Y axis is the first direction, and the wavelength of the second light beam changes linearly in the first direction.

The optical dispersion system 320 may include a concave grating 321 and a focusing apparatus 322. The focusing apparatus 322 is configured to focus, on a focal plane of the emitting optical system 330, the splitting beams obtained after the concave grating 321 performs splitting. The focusing apparatus 322 may be a concave mirror, a transmission focusing lens, or the like.

FIG. 4 is a schematic diagram of a structure of an optical dispersion system according to an embodiment of this application. As shown in FIG. 4, the optical dispersion system (which may also be referred to as a spectral beam splitting system) includes a convex grating and a concave reflector. In the figure, light emitted from a linear array light source is a first light beam, and light obtained after the light is reflected by the concave mirror and the concave grating and then reflected by the concave mirror is a second light beam. Specifically, the linear array light source emits the first light beam to the concave mirror, and the concave mirror focuses the first light beam on the convex grating. The concave grating performs splitting on the first light beam, and emits splitting laser beams to the concave mirror. Then, the concave mirror focuses the splitting laser beams to obtain the second light beam. It should be noted that the concave mirror may focus the second light beam on the focal plane of the emitting optical system 330, and form a two-dimensional rectangular image plane on the focal plane of the emitting optical system 330. The two-dimensional rectangular image plane is an image plane of the optical dispersion system 320, and also an object plane of the emitting optical system 330.

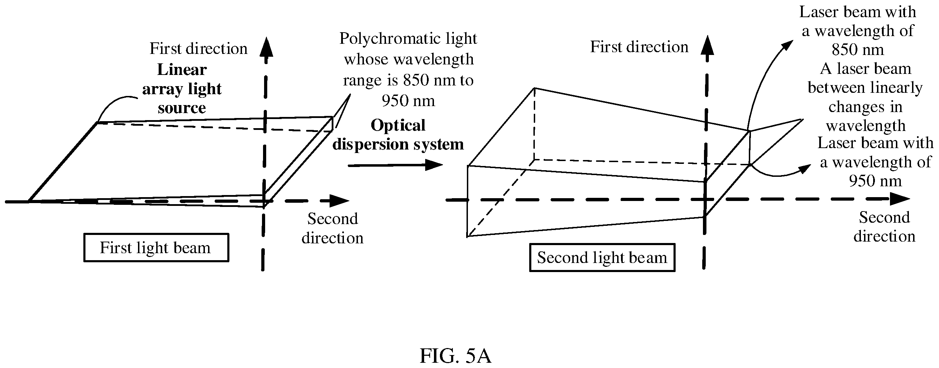

FIG. 5A is a schematic diagram of a first light beam and a second light beam according to an embodiment of this application. As shown in FIG. 5A, a second direction in the figure is parallel to an optical axis of a first light beam. The first light beam emitted by a linear array light source is polychromatic light with a wavelength range of 850 nm to 950 nm. The optical axis of the first light beam is parallel to the second direction in the figure. After the first light beam passes through an optical dispersion system, dispersion is performed on the first light beam to obtain a second light beam whose wavelength changes linearly in a first direction. An optical axis of the second light beam is parallel to the second direction in the figure. Specifically, in the first direction, a wavelength of a light beam at a top of the second light beam is 850 nm, a wavelength of a light beam at a bottom is 950 nm, and a light beam between the light beam at the top and the light beam at the bottom gradually increases in wavelength from top to bottom. It should be noted that, in practice, because the first light beam is polychromatic light, and the second light beam is a light beam whose wavelength continuously changes and that includes a plurality of splitting beams of different wavelengths, human eyes may recognize that the first light beam is a light beam of one color, and the second light beam has different colors in the first direction.

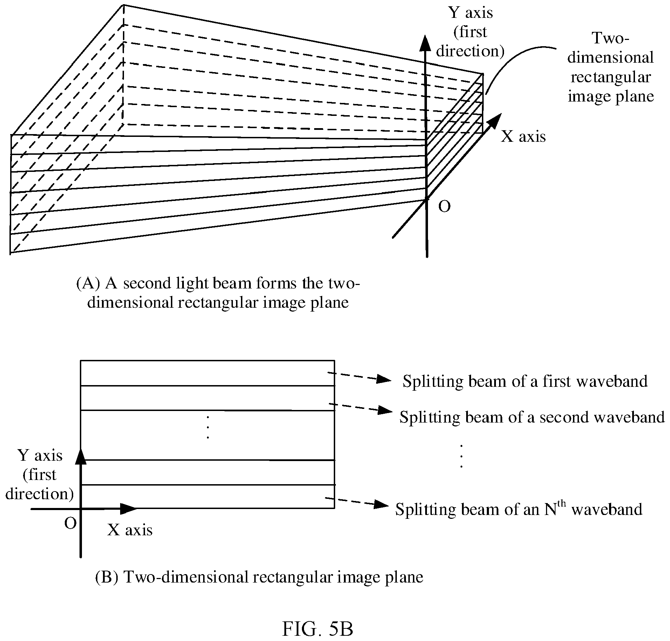

FIG. 5B is a schematic diagram of a two-dimensional rectangular image plane according to an embodiment of this application. As shown in FIG. 5B, a Y axis direction is the first direction, and the first direction is parallel to a width of the two-dimensional rectangular image plane. A Z axis direction is parallel to the width of the two-dimensional rectangular image plane. To describe a wavelength change situation of the second light beam in the first direction, the second light beam is schematically divided into a plurality of splitting beams in the figure. A wavelength of each splitting beam changes continuously. A wavelength range of each splitting beam is different, which are respectively a first waveband, a second waveband, ..., and an $N^{th}$ waveband. In the two-dimensional rectangular image plane, each Y axis position corresponds to a wavelength, and light beams at a same Y axis position have a same wavelength. For example, the wavelength range of the first light beam may be 850 nm to 950 nm. In this case, the splitting beams of 850 nm and 950 nm obtained by dispersion are respectively focused on an upper side and a lower side of the Y axis direction of the two-dimensional rectangular image plane, and positions of the splitting beams between the two sides in the Y axis direction change linearly with the wavelengths.

In some embodiments, the optical dispersion system may not change a length of the linear array light source, a length of the two-dimensional rectangular image plane in an X direction on the XOY plane may be consistent with the length of the linear array light source. The X direction of the two-dimensional rectangular image plane may represent a spatial dimension. The optical dispersion system extends the Y axis direction of the first light beam. In the Y axis direction, the optical dispersion system separates light beams of different wavelengths, thereby extending the width of the linear array light source in the Y axis direction. The width of the two-dimensional rectangular image plane in the Y direction of the XOY plane follows a diffraction law, and is determined by a light splitting performance of the optical dispersion system. It should be noted that because light beams at different positions in the Y direction may have different wavelengths, and a spectrum of the target object may be obtained based on echo light beams of light beams at different positions in the Y direction, the Y direction of the two-dimensional rectangular image plane may represent a spectral dimension. In some embodiments, the length of the two-dimensional rectangular image plane in the X and Y directions is 1.43 mm and 0.30 mm, respectively.

It should be noted that a conventional emitting optical module needs to use an optical element like an area array light source, a diffractive optical element (Diffractive Optical Element, DOE), or a microlens array (MA), and costs are high. In this application, linear array light is extended to area array light by using the optical dispersion system. A combination of the linear array light source and the optical dispersion system is equivalent to an area array light source, to implement a light emitting manner of 3D flash. In this method, use of an area array light source or a complex optical element like a DOE or an MA is avoided, and costs can be reduced.

The emitting optical system 330 is configured to emit, to the detection space, the second light beam obtained by performing light splitting by the optical dispersion system 320. It should be understood that the focusing apparatus in the optical dispersion system 320 may focus the second light beam on the focal plane of the emitting optical system 330, and generate the two-dimensional rectangular image plane on the focal plane, that is, the two-dimensional rectangular image plane is the object plane of the emitting optical system.

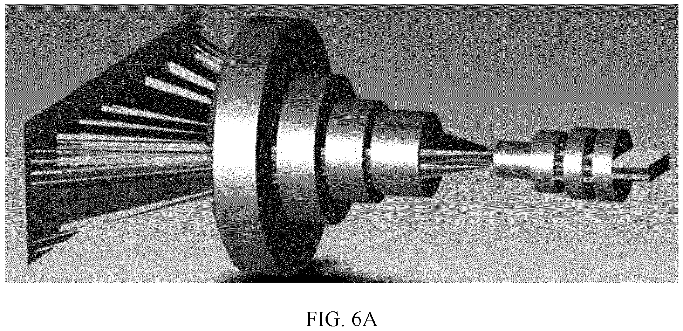

FIG. 6A is a three-dimensional schematic diagram of an emitting optical system according to an embodiment of this application. As shown in FIG. 6A, detection space is on the left side, and an emitting optical system is on the right side. It can be seen that the emitting optical system is formed by a plurality of lenses. The emitting optical system emits a second light beam to the detection space on the left side. To be specific, the emitting optical system projects a two-dimensional rectangular image plane into a rectangular field of view of the detection space, and the emitting optical system forms an inverted magnified image.

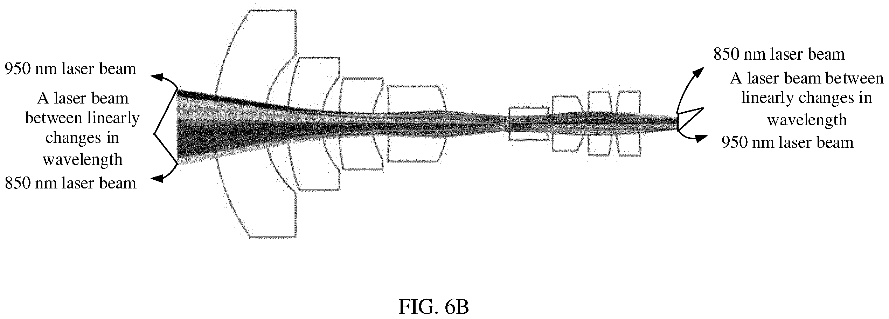

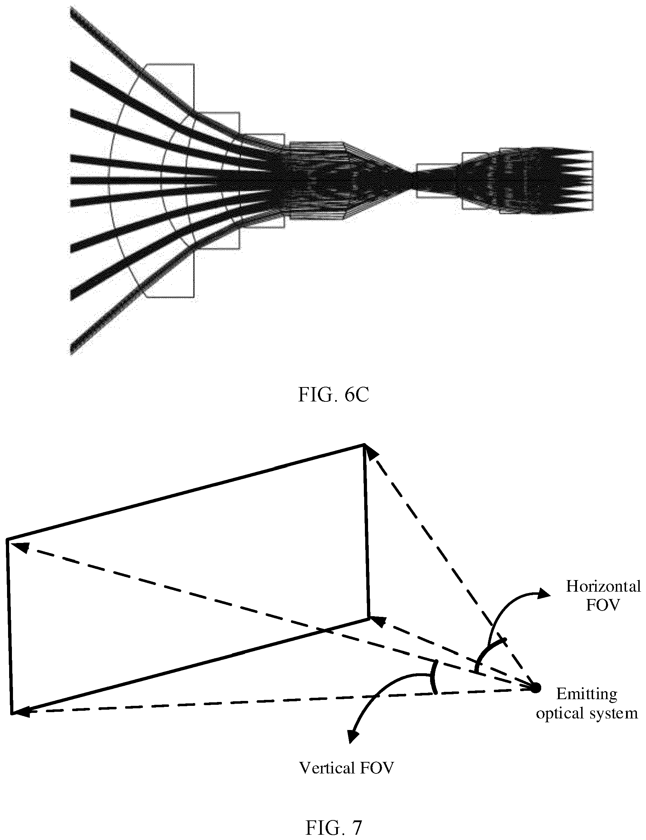

It is assumed that the emitting optical system shown in FIG. 6A is horizontally placed and an optical axis of the emitting optical system is parallel to an optical axis of the second light beam, a first direction is a vertical direction. A horizontal direction is set as a Z axis, the first direction is a Y axis, and a direction perpendicular to YOZ is an X axis. Projections of the emitting optical system in two cross-sections of YOZ and XOZ are shown in FIG. 6B and FIG. 6C, respectively.

FIG. 6B is a schematic diagram of a cross section of an emitting optical system according to an embodiment of this application. FIG. 6B is a cross section of the emitting optical system in the YOZ plane. Because the emitting optical system forms the inverted magnified image, it can be seen that a wavelength change of the second light beam is reversed. As shown in FIG. 6B, before passing through the emitting optical system, a wavelength change of the second light beam in the first direction increases from 850 nm to 950 nm. After passing through the emitting optical system, a wavelength change of the second light beam in the first direction decreases from 950 nm to 850 nm.

FIG. 6C is a schematic diagram of another cross section of an emitting optical system according to an embodiment of this application. FIG. 6C is a cross section of the emitting optical system in the YOZ plane. It may be understood that this figure may also be considered as a schematic diagram of emitting laser beams of a same wavelength.

Specifically, the emitting optical system 330 is configured to emit the second light beam emitted by the optical dispersion system 320 to the detection space at a first FOV and a second FOV The first FOV corresponds to a width of a two-dimensional rectangular image plane and a first focal length of the emitting optical system. The second FOV corresponds to the width of the two-dimensional rectangular image plane and a second focal length of the emitting optical system. The first FOV and the second FOV may be the same or may be different. It should be noted that the first FOV and the second FOV may also be referred to as a rectangular FOV

FIG. 7 is a schematic diagram of emitting a second light beam by an emitting optical system according to an embodiment of this application. As shown in FIG. 7, the emitting optical system emits the second light beam into detection space at a horizontal FOV and a vertical FOV The horizontal FOV corresponds to a width of a two-dimensional rectangular image plane and a first focal length of the emitting optical system. The vertical FOV corresponds to the width of the two-dimensional rectangular image plane and a second focal length of the emitting optical system. The detection space is a rectangular field of view. It should be understood that the emitting optical system instantly emits the foregoing focused laser beam to the detection space, that is, emits the two-dimensional rectangular image plane to the rectangular field of view of the detection space in a flash manner.

Specifically, the horizontal FOV $\theta_x$ and the vertical FOV $\theta_y$ may be obtained by using the following formula:

$$\theta_x = 2\text{arc}\,tan(\frac{X}{2f_x}), \theta_y = 2\text{arc}\,tan(\frac{Y}{2f_y})$$

$f_x$ and $f_y$ are respectively a focal length (that is, a first focal length) of an X field of view of the emitting optical system and a focal length (a second focal length) of a Y field of view of the emitting optical system. $X$ and $Y$ are respectively a length of a spatial dimension (that is, a length of the two-dimensional rectangular image plane) and a length of a spectral dimension (that is, a width of the two-dimensional rectangular image plane) of the two-dimensional rectangular image plane. It can be seen from the formula that, after the two-dimensional rectangular image plane is determined (that is, after the lengths of the spatial dimension and the spectral dimension are determined), the rectangular FOV of the emission can be controlled by adjusting the focal length of the X and Y fields of view of the emitting optical system.

In some embodiments, both $f_x$ and $f_y$ of the emitting optical system may be 0.85 mm. The emission FOVs in two directions of the X axis and the Y axis may be different. For example, when the lengths of the two-dimensional rectangular image plane in the two directions of the X axis and the Y axis are 1.43 mm and 0.3 mm respectively, according to the foregoing formula, it can be obtained that the FOV of the emitting optical system in the X direction is 80°, and the FOV of the Y direction is 40°. At a distance of 5 meters, a range covered by the second light beam emitted by the emitting optical system is a rectangular region of 8.39 m × 1.76 m.

Optionally, the emitting optical system 330 may further include an optical element like a cylindrical lens or a toroidal lens, to further control an emission angle range of an emission field of view in a length direction and a width direction.

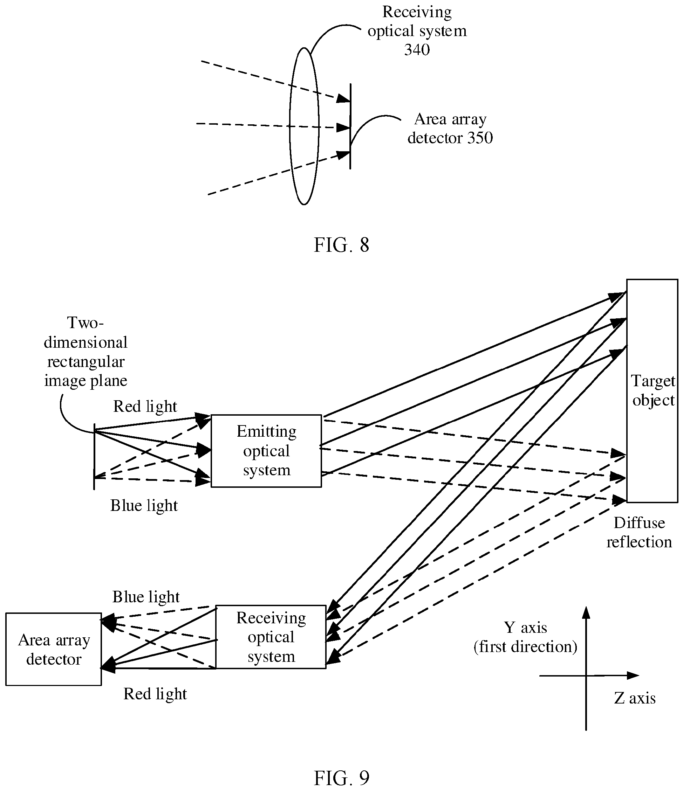

FIG. 8 is a schematic diagram of a receiving optical module according to an embodiment of this application. As shown in FIG. 8, the receiving optical module includes a receiving optical system 340 and an area array detector 350. The receiving optical system 340 focuses a received light beam on the area array detector 350.

FIG. 9 is a schematic diagram of a second light beam and an echo light beam according to an embodiment of this application. As shown in FIG. 9, FIG. 9 is a schematic diagram on an XOY plane. In the figure, splitting beams of two wavebands in the second light beam are used as an example. In the figure, solid lines with arrows are used to represent red light and echo light beams of the red light, and dashed lines with arrows are used to represent blue light and echo light beams of the blue light. The red light and the blue light are emitted to the target object at different emission angles through an emitting optical system, and diffuse reflection is performed on the target object. The receiving optical system receives the echo light beams of red light and the echo light beams of blue light incident at different angles, and focuses the light beams incident at different angles at different positions in a Y axis direction of an area array detector, and light beams incident at a same angle on a same position in the Y axis direction of the area array detector.

The receiving optical system 340 is configured to receive the echo light beams of the second light beam emitted by the emitting optical system 330, and focus the echo light beams on the area array detector 350. Specifically, the receiving optical system 340 focuses, at different positions of the area array detector, light beams that are incident at different angles.

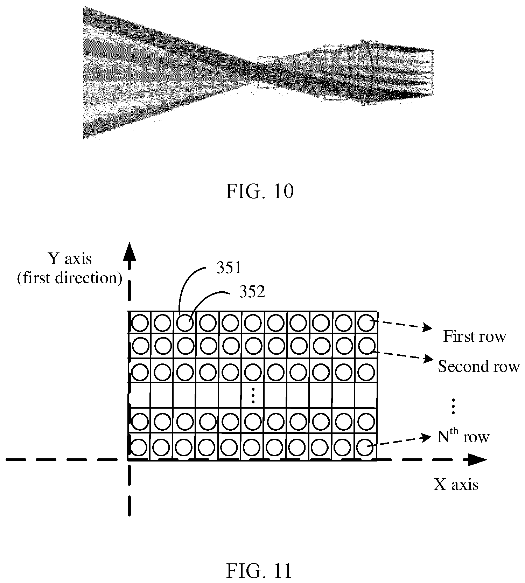

FIG. 10 is a schematic diagram of a structure of a receiving optical system according to an embodiment of this application. As shown in FIG. 10, the receiving optical system 340 is composed of a plurality of lenses. Lines of different gray levels in the figure represent echo light beams of different wavelengths. The echo light beams enter the receiving optical system from the left side, the receiving optical system forms an inverted reduced image, and the wavelength change of the second light beam in the first direction is reversed. Refer to the imaging situation of the emitting optical system 340. Details are not described herein again. It should be noted that the emitting optical system 330 may amplify the second light beam, and the receiving optical system 340 focuses the echo light beams of the second light beam.

The area array detector 350 is configured to receive the echo light beams of the second light beam. Specifically, the area array detector may include N regions. A plurality of pixels are arranged in the N regions as an array. The N regions do not overlap each other. The N regions are used to receive the splitting beams whose wavelengths change continuously. Wavelength ranges of the echo light beams received in the N regions are different.

FIG. 11 is a schematic diagram of an area array detector according to an embodiment of this application. As shown in FIG. 11, the area array detector includes N×M detection pixels. The area array detector may be divided into N rows in a first direction, and may be divided into M columns in a vertical direction of the first direction. A row of pixels is a region, and each row of pixels is configured to receive an echo light beam of a splitting beam of a wavelength range. It should be noted that the region of the area array detector corresponds to a second light beam, that is, corresponds to a two-dimensional rectangular image plane. If the second light beam is the second light beam shown in FIG. 5A and FIG. 5B, an $N^{th}$ row of the area array detector may be used to receive an echo light beam of the laser beam in the first waveband in FIG. 5B, an $(N-1)^{th}$ row may be used to receive an echo light beam of the laser beam in the second waveband in FIG. 5B. The rest may be deduced by analogy, and a first row may be used to receive an echo light beam of the laser beam in an $N^{th}$ waveband in FIG. 5B.

Preferably, this embodiment of this application may further include N light filtering apparatuses. The N light filtering apparatuses are disposed corresponding to the N regions, and are respectively configured to transmit echo light beams of the splitting beams corresponding to the N regions.

In an implementation, the light filter apparatus may be an optical filter membrane. Specifically, an $i^{th}$ optical filter membrane in the N optical filters is disposed on a side that is of an $i^{th}$ region of the N regions and that faces the detection space. The $i^{th}$ optical filter membrane is configured to transmit an echo light beam of an $i^{th}$ splitting beam in the second light beam. i is a positive integer not greater than N. For example, the light filtering apparatus may be an optical filter membrane. As shown in FIG. 11, a surface of each pixel 351 of the detector may be plated with a membrane layer 352 having a specific center wavelength and a specific wavelength cut-off range. Specifically, a same cut-off membrane layer is plated on pixels in each row of the area array detector, and different cut-off membrane layers are plated on pixels in different rows. To be specific, a row of pixels with a same Y position on the area array detector 150 has a same waveband transmission characteristic, and pixels with different Y positions have different wavelength transmission characteristics. For example, if the first waveband is a nm to b nm, and the $N^{th}$ row is used to receive the echo light beam of the laser beam of the first waveband in FIG. 5B, a center wavelength of the optical filter membrane plated in the $N^{th}$ row is $1/z(a+b)$ nm, and the wavelength cut-off range is a nm to b nm. It may be understood that, to distinguish echo wavebands of a specific field of view, a specific waveband is selected by plating optical filter membranes with different cut-off bandwidths in different regions of the area array detector, to implement a function of simultaneously receiving signals of different spectrums.

In another implementation, the light filtering apparatus may be a quantum dot. Quantum dots with different transmission characteristics are disposed in different regions, and only echo light beams of splitting beams corresponding to the regions are allowed.

In some embodiments, the detection apparatus may further include a processor. The processor is configured to obtain data obtained by the area array detector, and process the data, to obtain a spatial distance and spectral information of the target object. Specifically, the area array detector may determine, based on a time difference between an emission time of the N splitting beams and a time at which the pixels in the area array detector receive the echo light beams, the spatial distance detected by the pixels to the target, generate a spectrum based on the echo light beams received by using the plurality of pixels. The spectrum indicates light intensities of the echo light beams formed after the target reflects the splitting beams corresponding to the plurality of pixels.

For example, w splitting beams are reflected by the target object, w rows of the area array detector respectively receive echo light beams of the w splitting beams. The processor may obtain light intensities of the echo light beams of the w splitting beams. A light intensity of an echo light beam that irradiates the target object and that is received by one pixel in each row is taken to obtain a spectrum of the target object by using wavelengths of w splitting beams as horizontal coordinates and light intensities of echo light beams of splitting beams as vertical coordinates. Further, the processor may compare the spectrum of the target object with a spectrum of a known object, to determine a material of the target object. For example, if the spectrum of the target object is consistent with a spectrum of a substance A, the processor may determine that the target object is the substance A.

It may be understood that a common detection apparatus has only a ranging function, but does not have a capability of obtaining spectral information. The detection apparatus in this embodiment of this application performs spectral beam splitting on a light beam having a specific waveband by using an emission system and an optical dispersion system, so that wavelengths of light beams emitted from different FOVs are different.

An embodiment of this application further provides a laser radar, and the laser radar includes a detection apparatus. The detection apparatus may be the detection apparatus described in the foregoing embodiments in FIG. 1, FIG. 2, FIG. 4, FIG. 6A (or FIG. 6B, or FIG. 6C), FIG. 8, FIG. 9, or FIG. 11.

An embodiment of this application further provides a terminal. The terminal includes the foregoing detection apparatus, for example, the detection apparatus shown in FIG. 1, FIG. 2, FIG. 4, FIG. 6A (or FIG. 6B, or FIG. 6C), FIG. 8, FIG. 9, or FIG. 11.

Optionally, the terminal may be a transportation tool or an intelligent terminal like a vehicle, an uncrewed aerial vehicle, a roadside unit, an intersection radar, or a robot.

In the foregoing embodiments, all or some of the functions may be implemented by using software, hardware, or a combination of software and hardware. When software is used to implement the embodiments, the embodiments may be implemented entirely or partially in a form of a computer program product. The computer program product includes one or more computer instructions. When the computer program instruction is loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the procedures of the methods in embodiments may be implemented by a computer program instructing related hardware. The program may be stored in a computer-readable storage medium. When the program is run, the procedures of the methods in embodiments are performed. The foregoing storage medium includes any medium that can store program code, like a ROM, a random access memory RAM, a magnetic disk, or an optical disc.

**Claims**

1.　A detection apparatus, comprising:

a laser source, configured to emit a first light beam to an optical dispersion system, wherein the first light beam is polychromatic light whose wavelength range is a first waveband;
the optical dispersion system, configured to split the first light beam to obtain a second light beam, wherein a wavelength of the second light beam changes linearly in a first direction, the second light beam comprises splitting beams whose wavelengths change continuously in the first direction, and the first direction is perpendicular to an optical axis of the second light beam;
an emitting optical system, configured to emit the splitting beams; and
an area array detector, configured to receive echo light beams of the splitting beams, wherein the area array detector comprises N regions, a plurality of pixels are arranged in the N regions as an array, the N regions do not overlap each other, the N regions are used to receive the echo light beams of the splitting beams, wavelength ranges of the echo light beams received in the N regions are different, and N is a positive integer greater than 1.

2.　The apparatus according to claim 1, wherein the apparatus further comprises N light filtering apparatuses, the N light filtering apparatuses are disposed corresponding to the N regions, and are respectively configured to transmit the echo light beams of the splitting beams corresponding to the N regions.

3. The apparatus according to claim 1 or 2, wherein the optical dispersion system comprises a focusing apparatus and a concave grating, and the focusing apparatus is configured to focus the second light beam on a focal plane of the emitting optical system.

4. The apparatus according to claim 1 or 2, wherein the optical dispersion system comprises a convex grating.

5. The apparatus according to any one of claims 1 to 4, wherein the apparatus further comprises a receiving optical system; and
the receiving optical system is configured to focus the echo light beams on the N regions.

6. The apparatus according to any one of claims 1 to 5, wherein the emitting optical system comprises at least one cylindrical lens or toroidal lens arranged along an optical axis.

7. The apparatus according to any one of claims 1 to 6, wherein the laser source is a linear array light source, and an extension direction of the linear array light source is perpendicular to the first direction.

8. The apparatus according to claim 7, wherein the focusing apparatus is configured to focus the splitting beams on the focal plane of the emitting optical system to form a two-dimensional rectangular image plane, and a width of the two-dimensional rectangular image plane is parallel to the first direction.

9. The apparatus according to claim 8, wherein the emitting optical system emits the splitting beams at a first FOV and a second FOV, the first FOV corresponds to the width of the two-dimensional rectangular image plane and a first focal length of the emitting optical system, and the second FOV corresponds to the width of the two-dimensional rectangular image plane and a second focal length of the emitting optical system.

10. The apparatus according to any one of claims 1 to 9, wherein the apparatus further comprises a processor, the processor is configured to generate a spectrum based on the echo light beams received by using the plurality of pixels, and the spectrum indicates light intensities of the echo light beams formed after a target reflects the splitting beams corresponding to the plurality of pixels.

11. The apparatus according to claim 10, wherein the processor is further configured to determine, based on a time difference between an emission time of the splitting beams and a time at which the pixels in the area array detector receive the echo light beams, a spatial distance detected by the pixels to the target.

12. A laser radar, comprising the detection apparatus according to any one of claims 1 to 11.

13. A terminal, comprising the detection apparatus according to any one of claims 1 to 11.

FIG. 1

(A) Strip-shaped light source

(B) Linear array light source formed by
arranging a plurality of point light sources

FIG. 2

FIG. 3

FIG. 4

FIG. 5A

Y axis
(first
direction)

Two-
dimensional
rectangular
image plane

X axis

O

(A) A second light beam forms the two-
dimensional rectangular image plane

Splitting beam of a first waveband

Splitting beam of a second waveband

Y axis
(first
direction)

O    X axis

Splitting beam of an $N^{th}$ waveband

(B) Two-dimensional rectangular image plane

FIG. 5B

FIG. 6A

950 nm laser beam

A laser beam between linearly changes in wavelength

850 nm laser beam

850 nm laser beam

A laser beam between linearly changes in wavelength

950 nm laser beam

FIG. 6B

EP 4 307 005 A1

FIG. 6C

Horizontal FOV

Emitting optical system

Vertical FOV

FIG. 7

Receiving
optical system
340

Area array
detector 350

FIG. 8

Two-
dimensional
rectangular
image plane

Red light

Emitting
optical
system

Blue light

Target
object

Diffuse
reflection

Blue light

Area array
detector

Receiving
optical
system

Y axis
(first direction)

Z axis

Red light

FIG. 9

FIG. 10

FIG. 11

## INTERNATIONAL SEARCH REPORT

| | International application No. |
|---|---|
| | **PCT/CN2022/079950** |

**A. CLASSIFICATION OF SUBJECT MATTER**

G01S 17/00(2020.01)i;  G01S 7/48(2006.01)i

According to International Patent Classification (IPC) or to both national classification and IPC

**B. FIELDS SEARCHED**

Minimum documentation searched (classification system followed by classification symbols)

G01S17/-;  G01S7/-

Documentation searched other than minimum documentation to the extent that such documents are included in the fields searched

Electronic data base consulted during the international search (name of data base and, where practicable, search terms used)

WPABSC, CNTXT, CNABS, USTXTC, WPABSC, cnki: 华为技术有限公司, 王晓恒, 色散, 光栅, 衍射, 分色, 光谱, 波长, 频率, 复色, 多色, 多频, 闪光, 面阵, 阵列, 线阵, 三维, 雷达, 测距, 距离; WPABS, DWPI, web of science: dispers+, diffract+, grating?, spectr+, wavelength?, waveband?, frequenc+, colo?r, lidar?, radar?, range?, distance.

**C. DOCUMENTS CONSIDERED TO BE RELEVANT**

| Category* | Citation of document, with indication, where appropriate, of the relevant passages | Relevant to claim No. |
|---|---|---|
| X | CN 208654311 U (WUHAN KYLE OPTICS TECHNOLOGY CO., LTD.) 26 March 2019 (2019-03-26) <br> description, paragraphs [0002]-[0026], and figures 1-2 | 1-6, 10-13 |
| Y | CN 208654311 U (WUHAN KYLE OPTICS TECHNOLOGY CO., LTD.) 26 March 2019 (2019-03-26) <br> description, paragraphs [0002]-[0026], and figures 1-2 | 7-9 |
| Y | US 2019317199 A1 (SANTEC CORP.) 17 October 2019 (2019-10-17) <br> description, paragraphs [0002]-[0110], and figures 1-14 | 7-9 |
| X | CN 110554408 A (VOLKSWAGEN AG) 10 December 2019 (2019-12-10) <br> description, paragraphs [0002]-[0087], and figures 1-2 | 1-6, 10-13 |
| X | JP 2009222616 A (TOYOTA CENTRAL RESEARCH & DEVELOPMENT LABORATORIES, INC.) 01 October 2009 (2009-10-01) <br> description, paragraphs [0001]-[0024], and figures 1-4 | 1-6, 10-13 |
| X | CN 111272094 A (PRECITEC OPTRONIK GMBH) 12 June 2020 (2020-06-12) <br> description, paragraphs [0002]-[0163], and figures 1-5 | 1-6, 10-13 |

☑ Further documents are listed in the continuation of Box C.   ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **11 May 2022** | **13 June 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2022/079950**

**C.** **DOCUMENTS CONSIDERED TO BE RELEVANT**

| Category* | Citation of document, with indication, where appropriate, of the relevant passages | Relevant to claim No. |
|---|---|---|
| A | CN 111650602 A (SOUTHWEST INSTITUTE OF TECHNICAL PHYSICS) 11 September 2020 (2020-09-11) <br> entire document | 1-13 |
| A | CN 110244307 A (YAO XIAOTIAN) 17 September 2019 (2019-09-17) <br> entire document | 1-13 |
| A | WO 2020076877 A1 (THE REGENTS OF THE UNIVERSITY OF CALIFORNIA) 16 April 2020 (2020-04-16) <br> entire document | 1-13 |
| A | CN 112437886 A (BARAJA PTY LTD.) 02 March 2021 (2021-03-02) <br> entire document | 1-13 |
| A | CN 112285724 A (UNIVERSITY OF ELECTRONIC SCIENCE AND TECHNOLOGY OF CHINA) 29 January 2021 (2021-01-29) <br> entire document | 1-13 |

Form PCT/ISA/210 (second sheet) (January 2015)

**INTERNATIONAL SEARCH REPORT**
**Information on patent family members**

International application No.

**PCT/CN2022/079950**

| Patent document cited in search report | | | Publication date (day/month/year) | Patent family member(s) | | | Publication date (day/month/year) |
|---|---|---|---|---|---|---|---|
| CN | 208654311 | U | 26 March 2019 | None | | | |
| US | 2019317199 | A1 | 17 October 2019 | DE | 112019002028 | T5 | 07 January 2021 |
| | | | | US | 2021063549 | A1 | 04 March 2021 |
| | | | | JP | 2022502628 | A | 11 January 2022 |
| | | | | WO | 2019204301 | A1 | 24 October 2019 |
| CN | 110554408 | A | 10 December 2019 | DE | 102018208669 | A1 | 05 December 2019 |
| | | | | IL | 266978 | D0 | 29 August 2019 |
| | | | | EP | 3579015 | A1 | 11 December 2019 |
| | | | | KR | 20190136990 | A | 10 December 2019 |
| | | | | US | 2019369250 | A1 | 05 December 2019 |
| JP | 2009222616 | A | 01 October 2009 | None | | | |
| CN | 111272094 | A | 12 June 2020 | US | 10466357 | B1 | 05 November 2019 |
| | | | | TW | 202022316 | A | 16 June 2020 |
| | | | | JP | 2022510336 | A | 26 January 2022 |
| | | | | WO | 2020114562 | A1 | 11 June 2020 |
| | | | | DE | 102018130901 | A1 | 04 June 2020 |
| | | | | EP | 3891465 | A1 | 13 October 2021 |
| | | | | KR | 20210092821 | A | 26 July 2021 |
| | | | | DE | 112019006017 | A5 | 02 December 2021 |
| | | | | US | 2020174127 | A1 | 04 June 2020 |
| | | | | CN | 211783339 | U | 27 October 2020 |
| CN | 111650602 | A | 11 September 2020 | None | | | |
| CN | 110244307 | A | 17 September 2019 | None | | | |
| WO | 2020076877 | A1 | 16 April 2020 | US | 2021396783 | A1 | 23 December 2021 |
| CN | 112437886 | A | 02 March 2021 | KR | 20210018925 | A | 18 February 2021 |
| | | | | CA | 3100714 | A1 | 12 December 2019 |
| | | | | WO | 2019232585 | A1 | 12 December 2019 |
| | | | | JP | 2022503383 | A | 12 January 2022 |
| | | | | AU | 2019280249 | A1 | 03 December 2020 |
| | | | | US | 2021247497 | A1 | 12 August 2021 |
| | | | | EP | 3803456 | A1 | 14 April 2021 |
| CN | 112285724 | A | 29 January 2021 | None | | | |

Form PCT/ISA/210 (patent family annex) (January 2015)

**REFERENCES CITED IN THE DESCRIPTION**

**Patent documents cited in the description**

- CN 202110278074